# EUROPEAN PATENT APPLICATION

(11) **EP 1 585 013 A1**
(43) Date of publication of application: **12.10.2005**
(21) Application number: 04008253.9
(22) Date of filing: 05.04.2004
(51) Int. Cl.: G06F 1/18, G06F 1/20

(54) **Internal arrangement of computer case**

(71) Applicant: Shuttle Inc., Taipei (TW)
(72) Inventor: Chen, Yin-Hung, Taipei (TW)
(74) Representative: Urner, Peter

(57) **Abstract**

An internal arrangement of a computer case allocates an access unit that provides booting and data storage functions to the computer in the upper portion of the case, such that headroom of the motherboard and the electronic devices soldered to the motherboard is cleared. Thereby, wiring runs are more regular, and air flowing from the front panel and two sides of the case can properly deliver heat generated by the electronic devices to the back of the case. Therefore, heat can be effectively dissipated out of the case. In addition, space can be properly utilized.

## Description

### BACKGROUND OF THE INVENTION

The present invention relates in general to an internal arrangement of a computer case, and more particular, to an arrangement which establishes a heat dissipation channel by changing allocation of an access unit for booting the computer and storing data of the computer.

In addition to the computer with the required operation speed and functions, many users prefer to buy and assemble individual components within a selected computer case. Apart from the color and flashing effects, the conventional computer cases have similar exterior features.

The conventional computer case is typically 80 to 90cm high. Such height may be very important for a professional user who will expand the hardware of the computer. However, to a general user who only needs a standard computer, the conventional computer case occupies too much space.

Therefore, some manufactures redesign the conventional desktop computer into an XPC small form factor (SFF) computer which uses the same components and accessories as the conventional desktop computer. The XPC SFF computer is about 1/3 to 1/4 of the size of the conventional desktop computer.

However, the heat dissipation performance of the XPC SFF computer is poor because various hardwares such as hard drive, 3.5" floppy drive, CD-RW, DVD are stacked together behind a front panel of the computer case, and these hardwares are so close to a motherboard of the computer. In addition, the irregular wire running prevents air entering from a front panel or two sides of the case from dissipating heat generated by the motherboard or hardware out of the case. Therefore, the poor heat dissipation performance affects normal operation of the hardwares.

To resolve the problems caused by the conventional heat dissipation of the computer case as described above, the Applicant, with many years of experience in this field, has developed a coffee and water dispenser as described as follows.

### BRIEF SUMMARY OF THE INVENTION

The present invention provides an internal arrangement of a computer case which establish a heat dissipation channel by changing allocation of an access unit that provides booting and data storage functions. Thereby, heat generated within the case can be effectively dissipated out of the case, and more space can be used within the case.

The arrangement provided by the present invention includes a case and at least one first access unit installed in an upper portion of the case. The first access unit is allocated in the upper portion of the case allowing air entering the case to flow and deliver heat to the back of the case.

These and other objectives of the present invention will become obvious to those of ordinary skill in the art after reading the following detailed description of preferred embodiments.

It is to be understood that both the foregoing general description and the following detailed description are exemplary, and are intended to provide further explanation of the invention as claimed.

### BRIEF DESCRIPTION OF THE DRAWINGS

These as well as other features of the present invention will become more apparent upon reference to the drawings therein:
Figure 1 illustrates an exploded view of a computer case and the hardware arrangement within the computer case;
Figure 2 illustrates perspective view of the computer case and the hardware arrangement;
Figure 3 shows a cross sectional view of the computer case and the hardware arrangement; and
Figure 4 shows the assembly of the computer case and the hardwares installed therein.

### DETAILED DESCRIPTION OF THE INVENTION

Reference will now be made in detail to the preferred embodiments of the present invention, examples of which are illustrated in the accompanying drawings. Wherever possible, the same reference numbers are used in the drawings and the description to refer to the same or like parts.

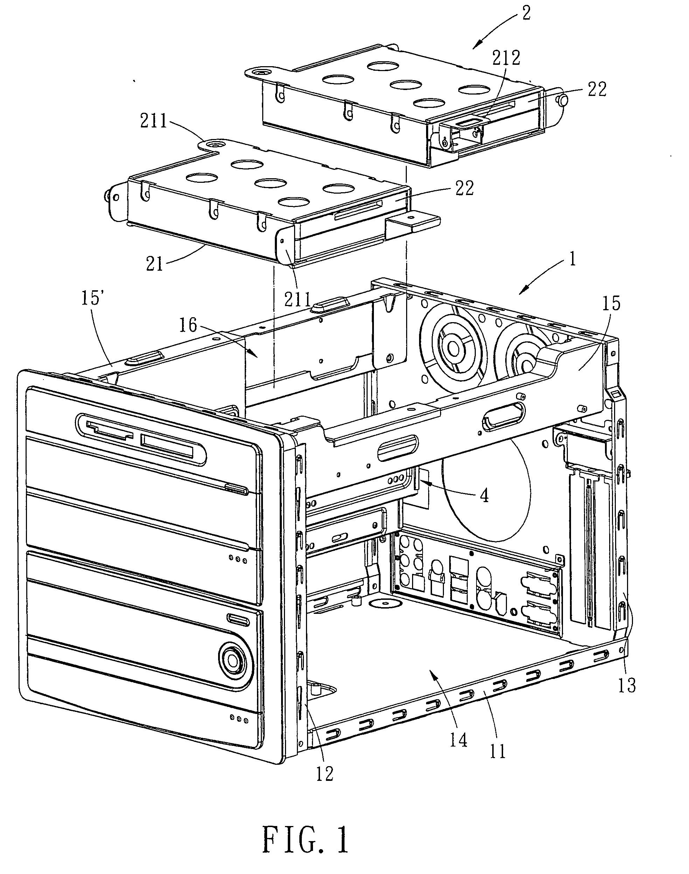

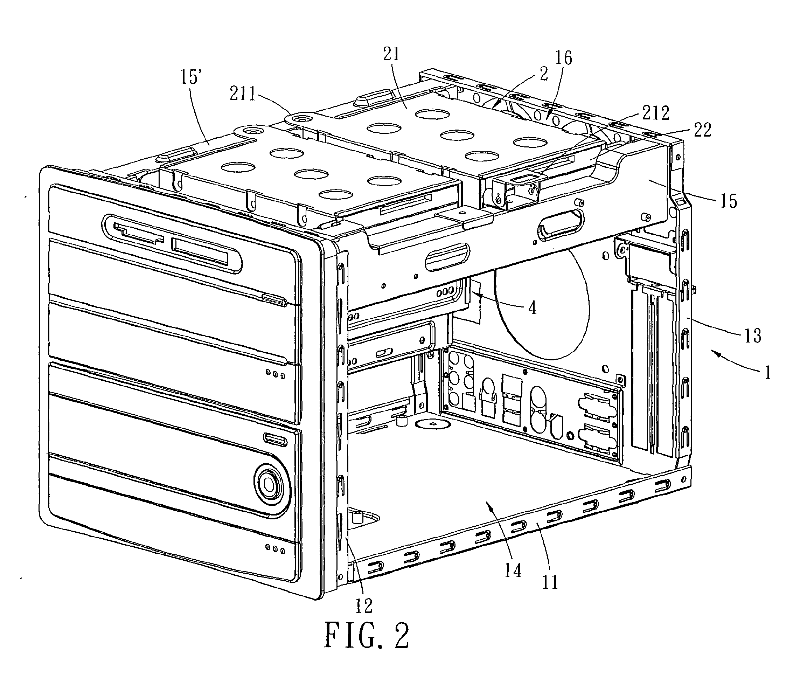

Referring to Figures 1 and 2, an exploded view and a perspective view of a computer case are illustrated. As shown, the small form factor computer includes a case 1 and at least one first access unit 2 installed in the case 1. By clearing space between a motherboard (not shown) and a second access unit 4, the air flow is more fluent within the case 1. Thereby, heat generated by the first and second access units 2 and 4 can be dissipated out of the case 1 efficiently to maintain normal operations of the first and second access units 2 and 4.

The case includes a bottom portion 11, a front panel 12 and a rear panel 13 adjacent to two opposing sides of the bottom portion 11. A receiving space 14 is formed between the front and rear panels 12 and 13, such that a motherboard can be allocated over the bottom portion 11. As mentioned above, various types of second access units 4 can be installed on the front panel 12. In this embodiment, the second access unit 4 includes a 3.5" floppy drive or a compact disk drive. The rear panel may be assembled with various types of connectors, heat dissipation devices and power supply (not shown). In addition, support members 15 and 15' are formed between the front and rear panels 12 and 13, such that at least one first access unit 2 can be installed in the case 11 at the space 16 between the support members 15 and 15'.

The first access unit 2 includes at least a box member 21 and a hard drive 22 disposed in the box member 21. Connection parts 211 are formed along a periphery of the box member 21, such that the box member 21 can be installed within the space 16 by the support of the support members 15 and 15'. A terminal 212 is formed at one end of the box member 21 allowing the disk drive to connect with a power supplied. The hard drive 22 provides boot and data storage function of the computer.

By changing the allocation of the first access unit 2, that is the hard drives 22 which are normally arranged under the second access unit 4 right behind the front panel 12 are moved a top portion of the case 1, the space between the motherboard and the second access unit 4 is cleared, such that an effective heat dissipation channel is established.

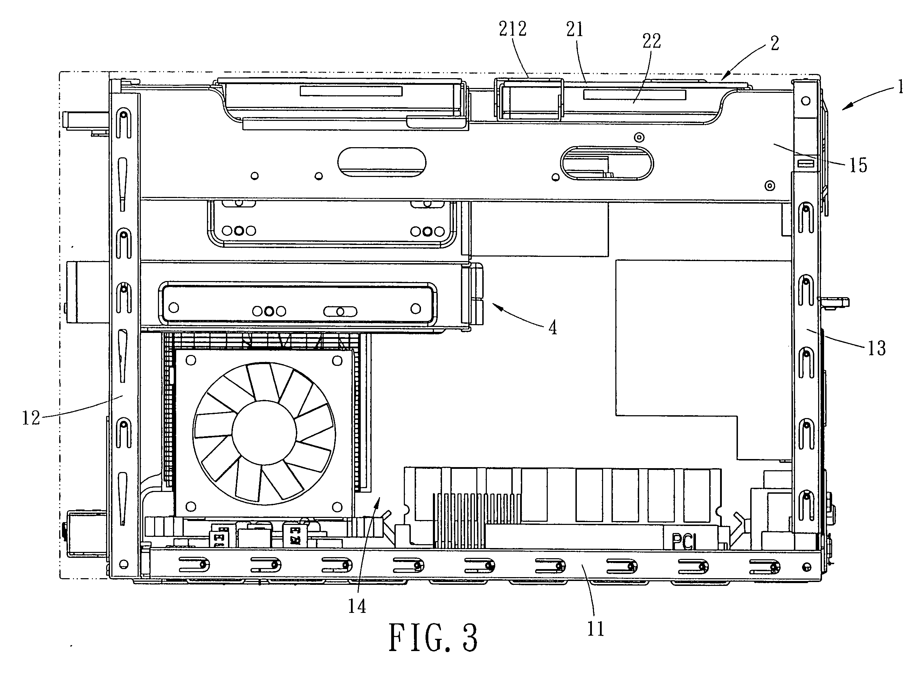

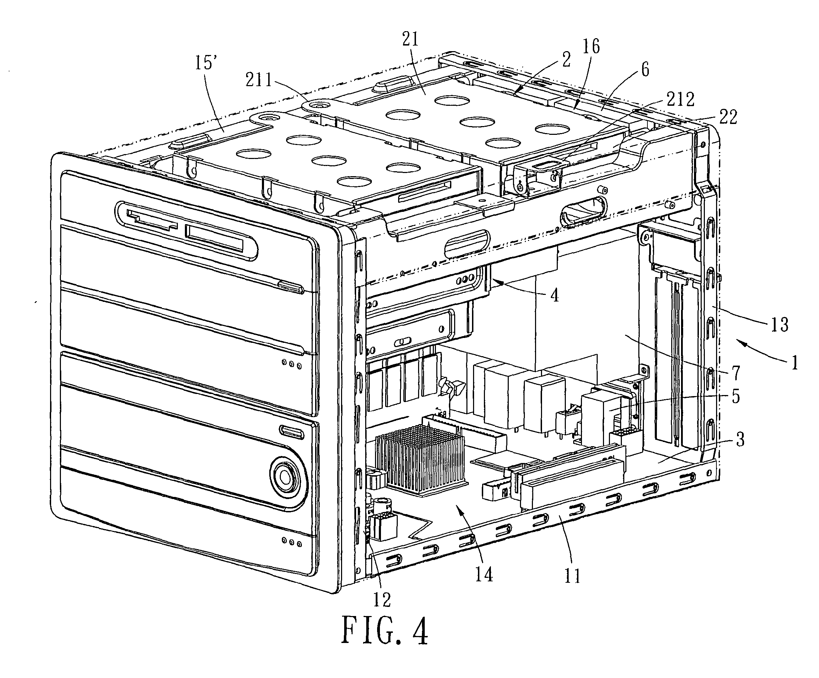

Referring to Figures 3 and 4, the cross sectional view and perspective view of the computer case and the hardwares installed therein are illustrated. As shown, the motherboard 11 is mounted on the bottom portion 11 of the case. The second access units (3.5" floppy drive and compact disk drive) 4 are sequentially located on the front panel 12. The connector 5, heat dissipation device 6 and power supply 7 are then installed on the rear panel 13. The first access unit 2 is then installed within the allocation space 16 formed by the support members 15 and 15'. As the first access unit 2 is installed in the space 16, the space between the second access unit 4 and the motherboard 3 is cleared to form a heat dissipation channel. Consequently, wiring runs are more regular, such that air flowing from the front panel 12 and two sides of the case 1 can deliver the heat accumulated around the heat source to the back of the case 1. Thereby, the heat is more easily dissipated out of the case 1.

Further, by increase the lengths of the support members 15 and 15', the space 16 is enlarged. Therefore, a number of the first access units 2 installed in the space can be increased. Therefore, array arrangement of the hard drives can be obtained to maximize data storage space.

While an illustrative and presently preferred embodiment of the invention has been described in detail herein, it is to be understood that the inventive concepts may be otherwise variously embodied and employed and that the appended claims are intended to be construed to include such variations except insofar as limited by the prior art.

## Claims

1. An internal arrangement of a computer case, which clear a space between a second access unit and a motherboard by changing an allocation of a first access unit, comprising:
a case; and
at least one first access unit installed in an upper portion of the case;
wherein the first access unit is allocated in the upper portion of the case allowing air entering the case to flow and deliver heat source to the back of the case.

2. The arrangement of Claim 1, wherein the case includes a bottom portion, a front panel and a rear panel adjacent to two opposing sides of the bottom portion, the front and rear panels form a receiving space.

3. The arrangement of Claim 2, further comprising a motherboard disposed within the receiving space over the bottom portion.

4. The arrangement of Claim 2, further comprising a second access unit under the first access unit within the receiving space.

5. The arrangement of Claim 4, wherein the second access unit includes a 3.5" floppy disk or a compact disk drive.

6. The arrangement of Claim 2, further comprising a plurality of connectors with various pins, a heat dissipation device and a power supply installed on the rear panel.

7. The arrangement of Claim 2, further comprising a pair of support members extending between the front and rear panels, wherein the support members form a space for receiving the first access unit therein.

8. The arrangement of Claim 1, wherein the first access unit includes a box member and a hard drive disposed in the box member.

9. The arrangement of Claim 8, wherein the box member includes a plurality of connection members formed along a periphery thereof to be fitted with the support members.

10. The arrangement of Claim 8, wherein the box member includes a terminal at one end thereof.
